Europäisches Patentamt

European Patent Office

Office européen des brevets

(19)

(11) Publication number: **0 330 248**
**A2**

## (12) EUROPEAN PATENT APPLICATION

(21) Application number: **89200214.8**

(51) Int. Cl.⁴: **G01N 27/56**

(22) Date of filing: **01.02.89**

(30) Priority: **22.02.88 IT 1947988**

(43) Date of publication of application:
**30.08.89 Bulletin 89/35**

(84) Designated Contracting States:
**AT BE CH DE ES FR GB GR IT LI LU NL SE**

(71) Applicant: **ENIRICERCHE S.p.A.**
**Corso Venezia 16**
**I-20121 Milan(IT)**

(72) Inventor: **Alberti, Giuliano**
**Via Ruggero Torelli 67**
**I-06100 Perugia(IT)**
Inventor: **Palombari, Roberto**
**Strada Bagnoli Giovo 1**
**I-06100 Perugia(IT)**

(74) Representative: **Roggero, Sergio et al**
**Ing. Barzanò & Zanardo Milano S.p.A. Via**
**Borgonuovo 10**
**I-20121 Milano(IT)**

(54) Solid-state sensor for determining the concentration of a gas.

(57) Completely solid-state sensors for determining the concentration of a gas, in particular of hydrogen, are disclosed, which are essentially constituted by electrodes separated by a protonic conductor in the solid state constituted by zirconium hydrogen phosphate in film or membrane form.

Fig.1

## SOLID-STATE SENSOR FOR DETERMINING THE CONCENTRATION OF A GAS

The present invention relates to solid-state sensors for determining the concentration of a gas, in particular of hydrogen.

In many processes deserving interest at a commercial level, not only the presence of determined gases should be detected, but it is important as well to have available a simple method, which makes it possible such gases to be continuously and quantitatively monitored in the atmosphere or in the reaction environment.

Some examples relevant to the detection of hydrogen are:

- In case hydrogen leaks occur in closed rooms, such leaks should be quickly detected, in order to prevent any explosion risks.

- Many metals and their alloys (for example, steels, titanium, zirconium, and so forth) react with hydrogen to yield hydrides, with their mechanical characteristics being consequently impaired.

- In many corrosion phenomena, hydrogen is generated: therefore, the presence of hydrogen can be indicative of the fact that a corrosion process is taking place (this is useful in particular in order to check parts which are not easily accessible in case of a direct inspection).

- The continuous monitoring of hydrogen in reactions producing or consuming such a gas can be useful in order to control the same reactions for the best.

Prior to 1980, hydrogen was essentially detected by means of polarographic techniques, as disclosed by K. Barthlett, J.V. Dobson, E. Easthman in Chimica Acta 108, 189 (1980), but in the past years a strong trend arose in the art, to replace such a method with simpler and less cumbersome electrochemical devices, such as sensors based on solid-state electrolytes.

In case of hydrogen, such sensors use a protonic-conduction solid, which separates two compartments containing different hydrogen partial pressures.

At the platinum electrodes, installed on both mutually opposite faces of the protonic conductor, an e.m.f. is generated, the value of which is given by the Nernst equation.

For not very high pressures, such an equation can be written as follows:

$$E = RT/nF \ln P_{H2}/P_{H2(ref)} \qquad (1)$$

wherein:

R is the constant of gases ($8.34 \ J.gmol^{-1}.K^{-1}$),
F is the Faraday constant (96,500 Coulombs),
T is the absolute temperature as degrees Kelvin and
n is the number of electrons involved in the process.

In the specific case of hydrogen, n is 2 (in that the process is:
$H_2 \rightleftharpoons 2H^+ + 2e$).

Going to decimal logarithms, we have, at $25\,^\circ C$:

$$E = 0.0296 \log P_{H2}/P_{H2(ref)} \qquad (2)$$

If the reference partial pressure is known, the unknown $P_{H2}$ pressure can be obtained from a potentiometric measurement of E.

To date, various inorganic solid substances are known, which are endowed with a relatively high protonic conductivity at room temperature, such as, e.g: uranyl hydrogen phosphate, antimonic acid, phosphomolybdic acid, zirconium hydrogen phosphate and dizirconium triphosphate in hydrogen form.

All these protonic conductors are therefore endowed with applicative potentialities in hydrogen sensors. Also some organic polymers, such as Nafion in hydrogen form, can be used as protonic conductors, such as described by J. Jensen in "Solid State Protonic Conductors for Fuel Cells and Sensors" (page 1, Editors: Godehough J.B. Jensen, Poitier A., Odense University Press, 1985).

Some of such solids have actually given rather good results in the manufacturing of sensors for hydrogen gas (see, e.g., Miura N., Kato N. Yamatoe and Jeiyama T., Proc. Int. Meet. Chem. Sensors, Fukuoka, page 233, 1983).

A further simplification is obtained in the sensor by using a reference electrode in the solid state, thus a completely solid-state sensor being accomplished.

In the European Patent N. 94919 a process is disclosed for obtaining colloidal dispersions of zirconium phosphate, by means of which it results it possible: either coating various solids with a thin and compact film of such a protonic conductor; or obtaining zirconium phosphate as very thin membranes.

The present Applicant has found now that such films (also denominated "zirconium phosphate in film form") and/or membranes of zirconium hydrogen phosphate can be used in order to accomplish simple and efficient solid-state sensors for the determination of gases.

The completely solid-state sensor for determining the concentration of a gas, in particular of hydrogen, which is the object of the present invention, is essentially constituted by electrodes separated by a solid-state protonic conductor constituted by zirconium hydrogen phosphate in film or membrane form.

Those gases can be determined, which are capable of altering the electrochemical potential of protons at the interface between the protonic conductor and the monitored gas.

The reference electrode can be gaseous, or it can be in the solid state.

The use of zirconium phosphate in film form, or of zirconium phosphate in membrane form results, in fact, to be particularly advantageous in gas sensors, in particular in hydrogen sensors, which use a solid-state reference in lieu of the gas reference electrode. The present Applicant has found in fact that the membrane of zirconium phosphate can be directly installed on this sheets which constitute the reference, which in such a case also acts as the electrode, without the interposition of a platinum layer. The present Applicant has found as well, that the reference can be directly coated with a layer obtained from a small amount of the aqueous dispersion of colloidal zirconium phosphate. After the evaporation of water, the reference is thus coated by an adhering, thin and compact film of zirconium phosphate. The sensor can be subsequently finished by depositing on said film, by sputtering, a thin platinum layer. By such a route, a total sensor thickness lower than 1 mm can be obtained. By having available a suitable technology, such a method is particularly well suited for accomplishing microsensors for hydrogen gas.

When a solid-state reference is used, the equation (2) can be advantageously written as:
$$E = \text{constant} - 0.0296 \log P_{H_2}$$
wherein the value of the constant depends on the reference electrode used.

As the reference electrodes in the solid state, such electrodes as known from the prior art can be used.

For example, a reference in the solid state reported in the relevant technical literature is constituted by a silver foil.

The present Applicant has anyway found that, in the presence of high hydrogen partial pressures, a total reduction of $Ag^+$ in the protonic conductor may take place. In order to prevent such a drawback from occurring, the present Applicant suggests that a thallium electrode should be used, which is placed into contact with the zirconium phosphate in film form partially exchanged with $Tl^+$, or, contrarily to as reported in the technical literature by Lyon S.B. and Fray J.D. (Solid-State Ionics, 9-10, 1295 /1983), solid-state reference electrodes should be used, which consist of hydrides of a metal or of hydrides of a metal alloy, such as, e.g., interstitial titanium hydride ($TiH_x$) and interstitial zirconium hydride ($ZrH_x$): these electrodes behave as extremely good solid-state references for the gas sensors, in particular for hydrogen sensors, which use zirconium phosphate in film form, or membranes of said protonic conductor.

In case hydrides are used, the function of the same hydride seems to be that of securing a constant activity of hydrogen at the hydride/zirconium phosphate interface, so that the sensor can be regarded as a concentration cell. Such hydrides can be prepared with a variable hydrogen concentration, by heating thin sheets of the metals in the presence of $H_2$ at a temperature comprised within the range of from 400 to 700°C.

Once formed, the hydrogen pressure in equilibrium with such hydrides, in particular at temperatures not higher than 200°C, is absolutely negligible. Such systems secure a constant potential value on the reference side, and therefore also the stability of the calibration of the sensor for long time periods.

As catalysing electrodes, those known from the technical literature can be used; among them, platinum and palladium may be cited for exemplifying purposes.

The preparation of a sensor completely in the solid state for hydrogen gas, with a solid-state reference electrode can be carried out by means of the following operating steps:

a) the reference electrodes are prepared;

b) the aqueous dispersion of colloidal zirconium phosphate is prepared;

c) the reference electrodes are coated with zirconium phosphate in film form (or with a pre-formed membrane of zirconium phosphate);

d) on the free face of the zirconium phosphate in film form (or of the pre-formed zirconium phosphate membrane) a thin layer of platinum (or of palladium) is deposited.

a) Preparation of the Reference Electrodes

Only the preparations of the electrodes which contain thallium or metal hydrides (titanium or zirconium hydrides), i.e., of electrodes having a novel composition, are herein reported; for the electrodes known from the prior art, the already known processes can be applied.

- Thallium reference electrode:

A thin sheet of thallium metal can be directly used, or a thin sheet of another metal (e.g., silver), coated with a thin thallium layer can be used. Such a coating can be obtained, e.g., by means of the electrolysis of a solution of thallous sulphate and hydrazine sulphate.

## - Titanium (or zirconium) hydride reference electrodes

The preparation of titanium (or zirconium) hydride can be carried out by heating at temperature comprised within the range of from 400 to 700°C, for from 2 to 10 hours, a thin sheet of the concerned metal (of from 0,25 to 1 mm of thickness), in the presence of hydrogen gas.

## b) Preparation of the Aqueous Dispersion of Colloidal Zirconium Phosphate

In order to obtain such a colloidal dispersion, the indications reported in the European Patent Number 94919 were mostly followed.

Zirconium hydrogen phosphate monohydrate, having a layer structure of $\alpha$ type, $\alpha$-Zr(HPO$_4$)$_2$.H$_2$O (preferably prepared by means of the method of precipitation in the presence of hydrofluoric acid, as described by Alberti G. and Torraca E. in J. Inorg. Nucl. Chem., 30, 317 (1969), was intercalated up to 50% of its total capacity with propylammonium. With strong stirring, in such a way a colloidal dispersion of lamellar particles of zirconium phosphate in propyl amine form can be obtained. Dispersions containing 1 gram of zirconium phosphate in 200 ml of water do not appreciably settle, and therefore can be easily maintained at room temperature for long time periods (even for some months) after being prepared. In order to obtain again zirconium phosphate in hydrogen form, a mineral acid should be added (generally 0.1M HCl, in an amount of 25 ml per each 100 ml of dispersion). At the end of the addition, carried out with strong stirring, zirconium phosphate still remains in the dispersed state. However, such dispersions tend to settle, even if slowly, and can be easily separated from the solution (e.g., by means of centrifugation at 2,000 revolutions per minute). Zirconium phosphate is then dispersed again in distilled water, and the treatment with HCl is repeated, until propyl-ammonium chloride is completely removed.

## c) Coating of the Reference Electrodes with Zirconium Phosphate

### - Coating with Zirconium Phosphate in Film Form

A suspension of colloidal zirconium phosphate in hydrogen form, prepared according to as disclosed under (b), is evenly sprayed (e.g., by means of a sprayer device for use in chromatography) onto a sheet of the material used as the solid-state reference. After drying in air, the sheet results to be coated with an adhering and compact film of zirconium phosphate. According to an alternative route, a slab of the material to be coated, having a just slightly smaller diameter than a Petri dish, is placed on the bottom of said Petri dish. Above the slab a layer of a few millimiters of colloidal suspension of zirconium phosphate is deposited. After water evaporation, the slab remains coated with an adhering film of zirconium phosphate.

For the preparation of single, small-size electrodes, on the slabs of the reference material, a droplet of suspension is deposited and is allowed to dry. This treatment can be repeated a plurality of times, until a film having the desired thickness is obtained.

### - Coating with a Previously Prepared Membrane of Zirconium Phosphate

The dispersion of zirconium phosphate in distilled water is slowly filtered through a flat filter of a porous plastic material, in its turn placed above a paper filter. After the end of the filtration the filter, bearing the zirconium phosphate stratified on it, is dried. After such a drying, from the filter the deposited zirconium phosphate can be easily separated as a compact membrane, provided with a certain flexibility; the thickness of said membrane is a function of the amount of suspension used, of the concentration of suspended solids in it, and of the surface area of the filter.

For use in the sensors according to the present invention, membranes having thicknesses of the order of 0.2 mm were prepared.

## d) Deposition of a Platinum Layer on Zirconium Phosphate

A good method used by the present Applicant in order to obtain an active enough platinum surface consists in carrying out a Pt sputtering directly on the film layer, or on the membrane of zirconium hydrogen phosphate. By using a Balzers Union (SCD040) device, the conditions most frequently used by the present Applicant are: electrical current intensity 15 mA; argon pressure 0.05-0.1 mbar; sputtering time 10-20 minutes.

Another method used by the present Applicant consists in adding platinum black to a colloidal dispersion of zirconium phosphate (10-20 parts of platinum black per each part of zirconium phosphate). Platinum black is emulsified by stirring. A few droplets of such an emulsion is deposited on the membrane of zirconium phosphate, and is allowed to dry.

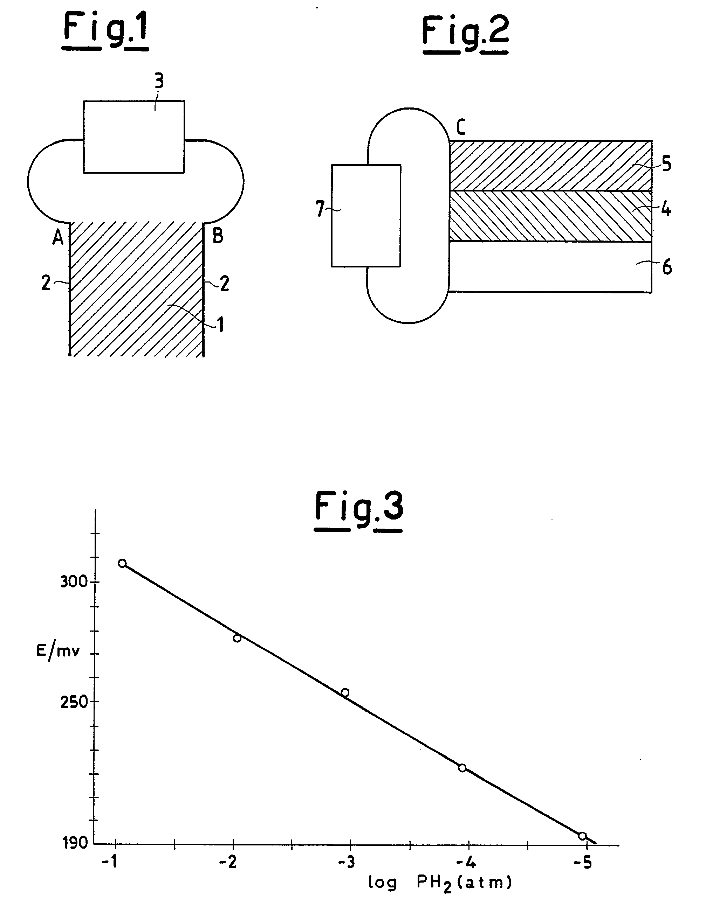

The sensors according to the present invention can be schematized as shown in Figure 1 and in Figure 2, which respectively show a schematic view of a sensor with a gaseous reference electrode, and a sensor with a reference electrode in the solid state.

In Figure 1, by the following reference numerals the following elements are indicated:

1. the solid-state protonic conductor, constituted by either zirconium hydrogen phosphate in film form, or zirconium hydrogen phosphate as a preformed membrane;

2. the platinum electrodes;

3. the instrument for e.m.f. measurement;

A and B. the two compartments containing different hydrogen partial pressures, separated by the conductor, wherein one of such compartments is the reference one.

In Figure 2, by the following reference numerals the following elements are indicated:

4. the protonic conductor in the solid state, constituted by either zirconium hydrogen phosphate in film form, or zirconium hydrogen phosphate as a pre-formed membrane;

5. the catalysing electrode;

6. the reference electrode in the solid state;

7. the instrument for e.m.f. measurement;

C. the compartment inside which the hydrogen to be determined is contained.

Some examples are given now, which have the purpose of better illustrating the present invention, it being understood that the same invention should not be regarded as being limited by them or to them.

Various calibration curves, obtained with sensors of the herein disclosed type for $N_2/H_2$ and air/$H_2$ mixtures at room temperature, at 100°C and at 200°C, are reported in the examples.

All the sensors accomplished showed very short response times. Such times depend on the partial pressure of hydrogen to be detected. For example, a sensor constituted by: titanium hydride/membrane of zirconium hydrogen phosphate/Pt (by sputtering) (membrane thickness = 0.2 mm), gave 90% of its response within a time comprised within the range of from 5 to 30 seconds for partial pressures of $H_2$ higher than $10^{-3}$ atm, with said response times increasing up to 30-60 seconds for $H_2$ partial pressures lower than $10^{-3}$ atm.

Example 1

A sensor constituted by: titanium hydride/membrane of zirconium hydrogen phosphate/Pt (by sputtering) (thin sheet of Ti having a thickness of 0.025 mm, treated with hydrogen for 4 hours at 500°C) was used in order to detect the hydrogen content of $N_2/H_2$ mixtures. By using $N_2/H_2$ mixtures of known composition, a calibration curve was obtained. Such a curve, at room temperature, is reported in Figure 3.

Example 2

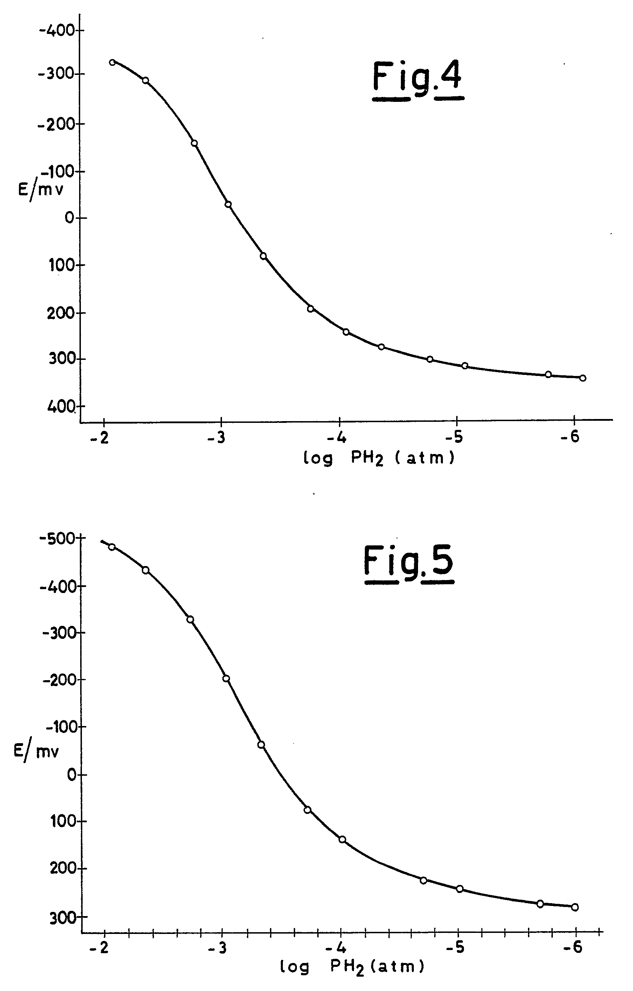

The sensor of Example 1 was used in order to generate the calibration curve of hydrogen in air. Such a curve, at room temperature, is reported in Figure 4.

Example 3

A sensor constituted by: titanium hydride/zirconium hydrogen phosphate in film form/Pt (by sputtering) was used in order to detect hydrogen in mixture with air, at room temperature. The relevant calibration curve is shown in Figure 5.

Example 4

A sensor constituted by: zirconium hydride/membrane of zirconium hydrogen phosphate/Pt (by sputtering) (thin sheet of Zr of 0.25 mm of thickness, treated with hydrogen for 8 hours at 500°C) was used in order to determine hydrogen in the presence of air, at room temperature.

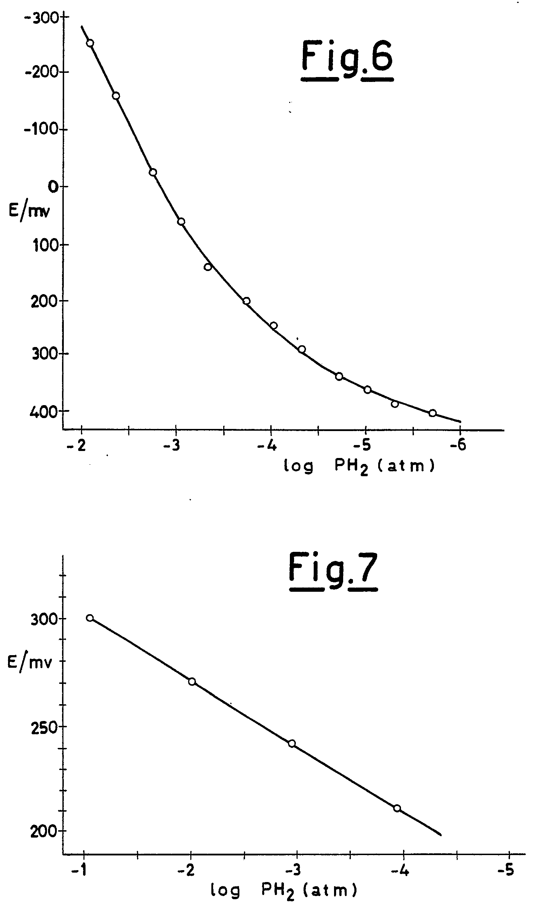

The relevant calibration curve is shown in Figure 6.

Example 5

A sensor constituted by: Tl/zirconium phosphate membrane in $H^+$, $Tl^+$ form/Pt (by sputtering) (metal Tl deposited on a thin sheet of Ag from saturated $Tl_2SO_4$, electrical current density 0.2 mA/cm$^2$ for 2 hours) was used in order to detect the content of hydrogen in $H_2/N_2$ mixtures.

By using the known-content mixtures as of Example 1, the calibration curve at room temperature shown in Figure 7 was obtained.

Example 6

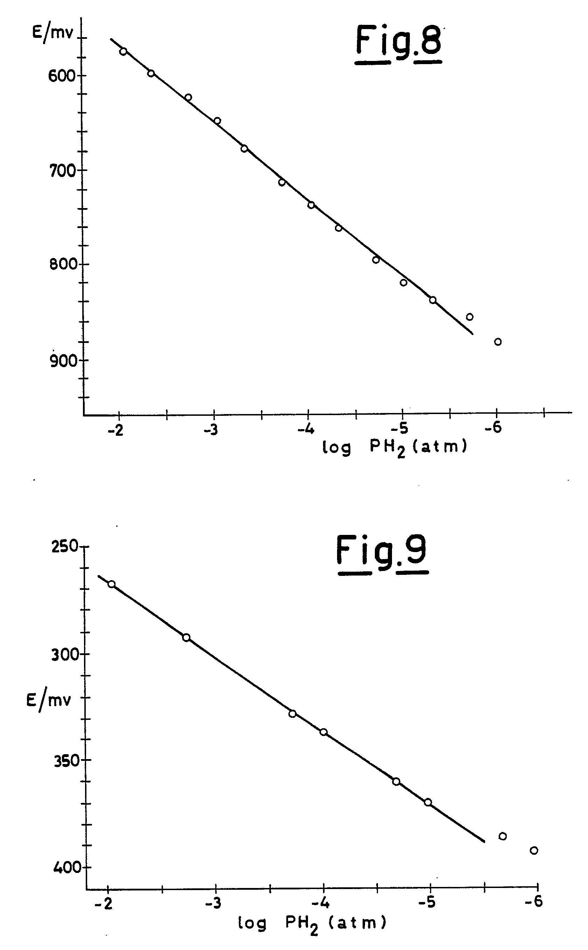

A sensor according to Example 4 was used in order to determine hydrogen, in the presence of air, at 100°C. The relevant calibration curve is shown in Figure 8.

## Example 7

A sensor according to Example 1 was used in order to determine hydrogen, in the presence of air, at 200°C. The relevant calibration curve is shown in Figure 9.

## Example 8

A sensor according to Example 1 was used in order to investigate into the interference by carbon monoxide in air at room temperature. It was found that high CO partial pressures, equal to $10^{-3}$ atm, give a slight interference corresponding to a $H_2$ pressure lower than $5.10^{-6}$ atm.

**Claims**

1. Completely solid-state sensor for determining the concentration of a gas, in particular of hydrogen, which is essentially constituted by electrodes separated by a solid-state protonic conductor constituted by zirconium hydrogen phosphate in film or membrane form.

2. Sensor according to claim 1, wherein the reference electrode is in the solid state.

3. Sensor according to claim 2, wherein the solid-state reference electrode is of thallium.

4. Sensor according to claim 2, wherein the solid-state reference electrode is a metal hydride, or a metal alloy hydride.

5. Sensor according to claim 4, wherein the solid-state reference electrode is of zirconium hydride.

6. Sensor according to claim 4, wherein the solid-state reference electrode is of titanium hydride.

7. Sensor according to claim 1, wherein the zirconium hydrogen phosphate in film form, or in membrane form, is obtained from colloidal dispersions of zirconium phosphate having a layer structure of $\alpha$-type.

8. Process for preparing a solid-state sensor for determining the concentration of a gas, in particular of hydrogen, according to claim 2, which comprises the following operating steps:

a) the reference electrodes are prepared;

b) the aqueous dispersion of colloidal zirconium phosphate is prepared;

c) the reference electrodes are coated with zirconium hydrogen phosphate in film form (or with a pre-formed membrane of zirconium phosphate);

d) on the free face of the zirconium phosphate in film form (or of the pre-formed zirconium phosphate membrane) a thin layer of platinum (or of palladium) is deposited.

# Fig.1

# Fig.2

# Fig.3

Fig.4

Fig.5

Fig.6

Fig.7

Fig.8

Fig.9